# EUROPÄISCHE PATENTSCHRIFT

(11) **EP 3 717 748 B1**
(45) Veröffentlichungstag und Bekanntmachung des Hinweises auf die Patenterteilung: **13.03.2024**
(21) Anmeldenummer: 18803334.4
(22) Anmeldetag: 30.10.2018
(51) Int. Cl.: F01D 5/28, F01D 5/14

(54) **LAUFSCHAUFEL EINER STRÖMUNGSMASCHINE UND VERFAHREN ZUM HERSTELLEN DERSELBEN**
ROTOR BLADE OF A TURBOMACHINE AND METHOD FOR PRODUCING SAME
AUBE DIRECTRICE D'UNE TURBOMACHINE ET PROCÉDÉ DE FABRICATION DE CELLE-CI

(30) Priorität: 29.11.2017 DE 102017128261
(43) Veröffentlichungstag der Anmeldung: 07.10.2020
(73) Patentinhaber: MAN Energy Solutions SE, 86153 Augsburg (DE)
(72) Erfinder: MOKULYS, Thomas, 46509 Xanten (DE); SALIT, Viktor, 46535 Dinslaken (DE)
(86) Internationale Anmeldenummer: PCT/EP2018/079672
(87) Internationale Veröffentlichungsnummer: WO 2019/105672

(56) Entgegenhaltungen:
- EP-A2- 1 944 465
- DE-A1- 1 551 176
- DE-A1-102015 107 766
- JP-A- H1 030 404
- US-A1- 2007 160 469
- US-A1- 2011 217 178

## Beschreibung

Laufschaufel einer Strömungsmaschine und Verfahren zum Herstellen derselben Die Erfindung betrifft eine Laufschaufel einer Strömungsmaschine gemäß dem Oberbegriff des Anspruchs 1. Des Weiteren betrifft die Erfindung ein Verfahren zum Herstellen einer solchen Laufschaufel.

In Strömungsmaschinen, wie zum Beispiel in Dampfturbinen, Gasturbinen, Kompressoren oder dergleichen, finden einerseits Laufschaufeln und andererseits Leitschaufeln Anwendung. Bei Leitschaufeln handelt es sich um statorseitige, feststehende Schaufeln. Bei Laufschaufeln handelt es sich um rotorseitige, also zusammen mit einer Welle rotierende, Schaufeln.

Eine Laufschaufel einer Strömungsmaschine verfügt über einen Schaufelfuß und ein Schaufelblatt. Der Schaufelfuß dient der Befestigung der Laufschaufel an einer Welle bzw. an einem Rotorgrundkörper. Das Schaufelblatt erstreckt sich ausgehend vom Schaufelfuß nach radial außen. Das Schaufelblatt einer Laufschaufel verfügt über eine Strömungseintrittskante, über eine Strömungsaustrittskante sowie über strömungsführende Flächen, die sich zwischen der Strömungseintrittskante und der Strömungsaustrittskante erstrecken. Radial außen wird die Laufschaufel typischerweise von einer Schaufelspitze begrenzt. Dokument JPH 1030404A offenbart eine Laufschaufel aus einer Titanlegierung, wobei an äußersten Ende des Schaufelblatts eine Schicht aus einer Titan-Aluminium Legierung durch ein generatives Fertigungsverfahren auf das Schaufelblatt aufgebracht ist.

Bei aus der Praxis bekannten Laufschaufeln handelt es sich um Baugruppen, die entweder durch Fräsen oder Schmieden hergestellt werden.

Es besteht Bedarf daran, Laufschaufeln mit geringerem Gewicht zu fertigen.

Hiervon ausgehend liegt der Erfindung die Aufgabe zu Grunde, eine neuartige Laufschaufel einer Strömungsmaschine und ein Verfahren zum Herstellen einer solchen Laufschaufel zu schaffen.

Diese Aufgabe wird durch einen Laufschaufel gemäß Anspruch 1 gelöst. Erfindungsgemäß sind der Schaufelfuß und ein radial innerer Abschnitt des Schaufelblatts aus einem Stahlwerkstoff hergestellt. Ein radial äußerer Abschnitt des Schaufelblatts ist aus einem leichteren Werkstoff hergestellt. Mit der hier vorliegenden Erfindung wird erstmals eine Laufschaufel einer Strömungsmaschine vorgeschlagen, deren Schaufelblatt in einem radial inneren Abschnitt aus einem Stahlwerkstoff und in einem radial äußeren Abschnitt aus einem leichteren Werkstoff hergestellt ist. Der leichtere Werkstoff ein Leichtmetalllegierungswerkstoff oder ein keramischer Werkstoff oder eine Kombination aus selbigen ist. Hierdurch können Laufschaufeln von Strömungsmaschinen mit geringerem Gewicht gefertigt werden. An diese Stelle wird darauf hingewiesen, dass innere Abschnitt des Schaufelblattes und der äußere Abschnitt stoffschlüssig verbunden sind und nicht z.B. nur formschlüssig verbunden.

Nach einer vorteilhaften Weiterbildung ist zwischen dem radial inneren Abschnitt des Schaufelblatts und dem radial äußeren Abschnitt des Schaufelblatts ein Übergangsbereich ausgebildet, der aus einer Mischung des Stahlwerkstoffs und des Leichtmetalllegierungswerkstoffs hergestellt ist. Das Vorsehen eines solchen Übergangsbereichs zwischen dem radial inneren Abschnitt und dem radial äußeren Abschnitt erlaubt eine besonders vorteilhafte Anbindung des radial äußeren Abschnitts an den radial inneren Abschnitt des Schaufelblatts.

Nach einer vorteilhaften Weiterbildung erstreckt sich im Bereich der Strömungseintrittskante der radial innere Abschnitt ausgehend vom Schaufelfuß bis minimal 10% und maximal 98%, bevorzugt bis maximal 60%, besonders bevorzugt bis maximal 50%, der radialen Höhe des Schaufelblatts. Im Bereich der Strömungsaustrittskante erstreckt sich der radial innere Abschnitt ausgehend vom Schaufelfuß bis minimal 10% und maximal 98%, bevorzugt bis maximal 60%, besonders bevorzugt bis maximal 50%, der radialen Höhe des Schaufelblatts. Hiermit ist es möglich, Laufschaufeln mit geringem Gewicht zu fertigen.

Vorzugsweise weist der radial innere Abschnitt des Schaufelblatts im Bereich der Strömungseintrittskante eine kleinere und damit der radial äußere Abschnitt des Schaufelblatts im Bereich der Strömungseintrittskante eine größere radiale Erstreckung auf als im Bereich der Strömungsaustrittskante. Dieser Weiterbildung der Erfindung liegt die Erkenntnis zugrunde, dass im Bereich der Strömungseintrittskante zur Verbesserung einer Erosionsbeständigkeit der radial äußere Abschnitt weiter nach radial innen geführt werden sollte als im Bereich der Strömungsaustrittskante.

Nach einer vorteilhaften Weiterbildung ist in einem Übergangsbereich zwischen dem radial inneren Abschnitt des Schaufelblatts und dem radial äußeren Abschnitt des Schaufelblatts eine Materialeinkerbung und/oder eine Materialaufdickung ausgebildet. Über die Materialeinkerbung und/oder Materialaufdickung im Übergangsbereich kann der Erosionsschutz weiter verbessert werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine schematisierte Darstellung einer ersten erfindungsgemäßen Laufschaufel;
- Fig. 2: eine schematisierte Darstellung einer zweiten erfindungsgemäßen Laufschaufel;
- Fig. 3: eine schematisierte Darstellung einer dritten erfindungsgemäßen Laufschaufel;
- Fig. 4: eine schematisierte Darstellung einer vierten erfindungsgemäßen Laufschaufel;
- Fig. 5: eine schematisierte Darstellung einer fünften erfindungsgemäßen Laufschaufel; und
- Fig. 6: eine schematisierte Darstellung einer weiteren erfindungsgemäßen Laufschaufel.

Die Erfindung betrifft eine Laufschaufel einer Strömungsmaschine. Eine Laufschaufel einer Strömungsmaschine verfügt über einen Schaufelfuß sowie ein Schaufelblatt. Der Schaufelfuß dient der Verbindung der Laufschaufel mit einem Rotorgrundkörper bzw. einer Welle.

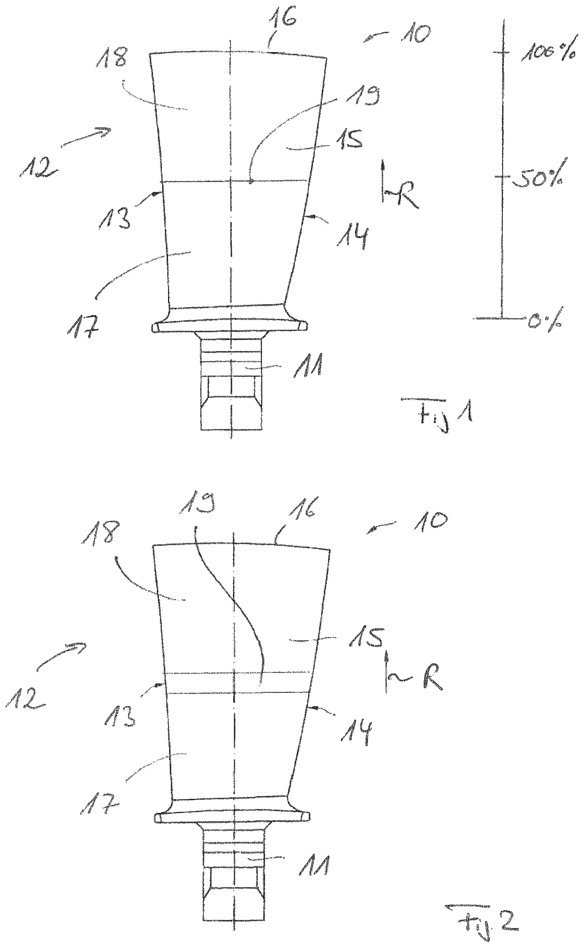

Fig. 1 zeigt ein erstes Ausführungsbeispiel einer erfindungsgemäßen Laufschaufel 10 einer Strömungsmaschine. Die Strömungsmaschine 10 verfügt über einen Schaufelfuß 11 sowie ein Schaufelblatt 12. Das Schaufelblatt 12 umfasst eine Strömungseintrittskante 13, eine Strömungsaustrittskante 14 sowie strömungsführende Flächen 15, die sich zwischen der Strömungseintrittskante 13 und der Strömungsaustrittskante 14 erstrecken. Eine dieser strömungsführenden Flächen 15 ist als Druckseite und die andere als Saugseite ausgeführt.

Vom Schaufelfuß 11 aus gesehen, welcher der Befestigung der Laufschaufel 10 an einer Welle oder an einem Rotorgrundkörper dient, weist das Schaufelblatt 12, welches der Strömungsführung dient, eine radiale Höhe bzw. eine Erstreckung in Radialrichtung R auf, wobei unmittelbar angrenzend an den Schaufelfuß 11 die radiale Erstreckung des Schaufelblatts 12 0% und radial außen im Bereich einer Schaufelspitze 16 die radiale Erstreckung des Schaufelblatts 12 100% beträgt.

Im Sinne der hier vorliegenden Erfindung sind der Schaufelfuß 11 und ein radial innerer Abschnitt 17 des Schaufelblatts 12 aus einem Stahlwerkstoff, also aus einem Eisenlegierungswerkstoff, hergestellt. Ein radial äußerer Abschnitt 18 des Schaufelblatts 12 ist aus einem Leichtmetalllegierungswerkstoff hergestellt.

Ein Übergangsbereich 19 zwischen dem radial inneren Abschnitt 17 des Schaufelblatts 12 und dem radial äußeren Abschnitt 18 desselben ist in Fig. 1 linienförmig ausgebildet.

Im Ausführungsbeispiel der Fig. 1 erstreckt sich im Bereich der Strömungseintrittskante 13 sowie im Bereich der Strömungsaustrittskante 14 der radial innere Abschnitt 17 des Schaufelblatts 12 ausgehend vom Schaufelfuß 11 bis in etwa 50% der radialen Höhe des Schaufelblatts 12.

Hiervon abweichend kann die radiale Erstreckung des radial inneren Abschnitts 17 und damit des radial äußeren Abschnitts 18 im Bereich von Strömungseintrittskante 13 und Strömungsaustrittskante 14 auch unterschiedlich sein.

Bei dem Leichtmetalllegierungswerkstoff des radial äußeren Abschnitts 18 des Schaufelblatts 12 handelt es sich vorzugsweise um einen Aluminiumlegierungswerkstoff oder um einen Titanlegierungswerkstoff.

Im Ausführungsbeispiel der Fig. 2 ist zwischen dem radial inneren Abschnitt 17 und dem radial äußeren Abschnitt 18 des Schaufelblatts 12 ein Übergangsbereich 19 ausgebildet, der aus einer Mischung des Stahlwerkstoffs und des Leichtmetalllegierungswerkstoffs besteht.

Vorzugsweise ändert sich das Mischungsverhältnis im Übergangsbereich 19, und zwar derart, dass im Übergangsbereich 19 von radial innen nach radial außen der Anteil des Stahlwerkstoffs abnimmt und der Anteil des Leichtmetalllegierungsstoffs zunimmt. Hierdurch kann eine besonders vorteilhafte Verbindung von radial äußerem Abschnitt 18 und radial innerem Abschnitt 17 des Schaufelblatts 12 über den Übergangsbereich 19 gewährleistet werden.

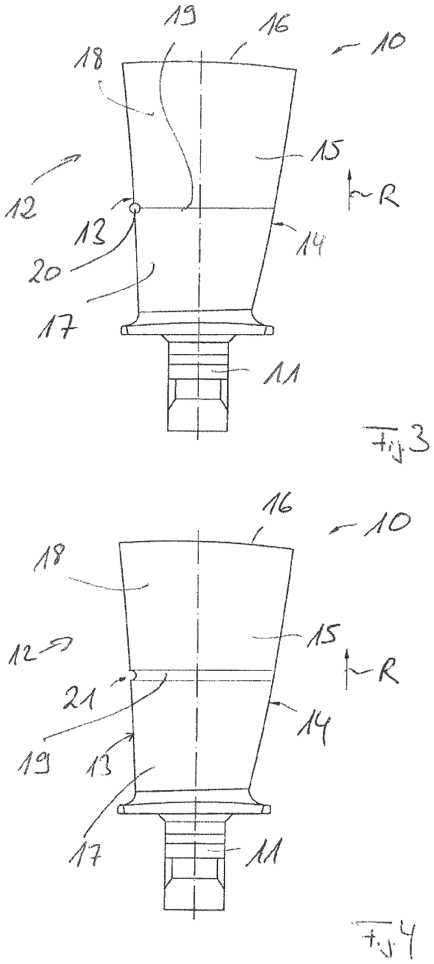

Fig. 3 zeigt eine Weiterbildung des Ausführungsbeispiels der Fig. 1, in welcher im Bereich des Übergangsbereichs 19 eine Materialaufdickung 20 ausgebildet ist, und zwar zumindest im Bereich der Strömungseintrittskante 13. Diese Materialaufdickung 20 kann sich auch in den Bereich der Saugseite und/oder der Druckseite und/oder der Strömungsaustrittskante 14 hinein erstrecken.

Im Unterschied zu einer solchen Materialaufdickung 20, die im Ausführungsbeispiel der Fig. 3 ausgebildet ist, kann auch im Übergangsbereich 19 eine Materialaussparung 21 ausgebildet sein, wie dies in Fig. 4 gezeigt ist. Die Materialaussparung 21 ist dabei zumindest im Bereich der Strömungseintrittskante 19 ausgebildet und kann sich auch in den Bereich der Saugseite und/oder der Druckseite und/oder der Strömungsaustrittskante 14 hinein erstrecken.

In den Ausführungsbeispielen der Fig. 1, 2, 3 und 4 weist der radial innere Abschnitt 17 des Schaufelblatts 12 und der radial äußere Abschnitt 18 des Schaufelblatts 12 im Bereich der Strömungseintrittskante 13 sowie der Strömungsaustrittskante 14 jeweils eine gleich große radiale Erstreckung auf.

Vorzugsweise liegt dann die radiale Erstreckung des radial inneren Abschnitts 17 bei minimal 30% und maximal 70%, bevorzugt bei minimal 30% und maximal 60%, besonders bevorzugt bei minimal 30% und maximal 50%, der radialen Erstreckung des Schaufelblatts 12.

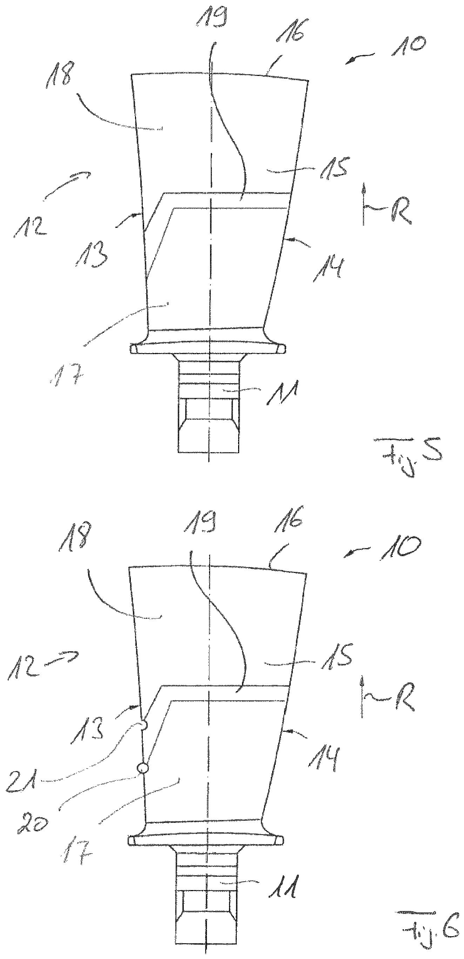

Fig. 5 und 6 zeigen Ausführungsbeispiele der Erfindung, in welcher die radiale Erstreckung des radial inneren Abschnitts 17 und des radial äußeren Abschnitts 18 im Bereich der Strömungseintrittskante 17 und der Strömungsaustrittskante 14 unterschiedlich sind. So weist im Bereich der Ausführungsbeispiele der Fig. 5 und 6 der radial innere Abschnitt 17 des Schaufelblatts im Bereich der Strömungseintrittskante 13 eine kleinere und damit der radial äußere Abschnitt 18 im Bereich der Strömungseintrittskante 13 eine größere Erstreckung auf als im Bereich der Strömungsaustrittskante 14.

Dabei sind in Fig. 5 und 6 zwischen diesen Abschnitten 17, 18 des Schaufelblatts 12 jeweils Übergangsbereiche 19 ausgebildet, in welchen sich vorzugsweise wiederum die Zusammensetzung der Mischung aus dem Stahlwerkstoff und dem Leichtmetalllegierungswerkstoff ändert.

Im Ausführungsbeispiel der Fig. 6 sind dabei im Bereich der Strömungseintrittskante 13 im Übergangsbereich 19 sowohl eine Materialaufdickung 20 als auch eine Materialaussparung 21 ausgebildet, nämlich eine Materialaussparung 21 im Übergangsbereich 19 benachbart zum radial äußeren Abschnitt 18 und eine Materialaufdickung 20 im Übergangsbereich 19 benachbart zum radial inneren Abschnitt 17.

Im Sinne der hier vorliegenden Erfindung wird demnach eine Laufschaufel 10 einer Strömungsmaschine vorgeschlagen, bei welcher der Schaufelfuß 11 und ein radial innerer Abschnitt 17 des Schaufelblatts 12 aus Stahl gefertigt ist, vorzugsweise über Fräsen oder Schmieden. An den radial inneren Abschnitt 17 des Schaufelblatts 12, der aus Stahl gefertigt ist, schließt sich entweder unmittelbar oder unter Ausbildung eines sich vorzugsweise hinsichtlich seiner Zusammensetzung ändernden Übergangsbereichs 19 der radial äußere Abschnitt 18 des Schaufelblatts 12 an, der aus dem Leichtmetalllegierungswerkstoff gefertigt ist. Das Aufbringen dieses radial äußeren Abschnitts 18 des Schaufelblatts 12 auf den radial inneren Abschnitt 17 desselben erfolgt vorzugsweise über ein generatives Fertigungsverfahren, wie Lasersintern oder Laserauftragsschweißen.

Bei der Ausbildung eines Übergangsbereichs 19 mit sich ändernder Mischung aus Stahl und LeichtmetalIlegierungswerkstoff wird dann bei Anwendung des generativen Fertigungsverfahrens die Zusammensetzung des aufzubringenden Werkstoffs sukzessive verändert.

Durch die Verwendung eines leichteren Werkstoffs am radial äußeren Abschnitt 18 der Laufschaufel 10 wirken bei hohen Umfangsgeschwindigkeiten geringere Kräfte auf den Schaufelfuß 11. Hierdurch wird der Schaufelfuß 11 entlastet. Hierdurch können Schaufelfüße 11 kürzer ausgeführt werden.

Mit der Erfindung kann die Erosionsbeständigkeit der Laufschaufeln insbesondere auch im Bereich der Strömungseintrittskante 13 verbessert werden.

Die Erfindung betrifft weiterhin ein Verfahren zum Herstellen einer solchen Laufschaufel 10. Zunächst werden der Schaufelfuß 11 und der radial innere Abschnitt 17 des Schaufelblatts 12, die aus dem Stahlwerkstoff hergestellt sind, durch Fräsen oder Schmieden hergestellt. Anschließend wird der radial äußere Abschnitt 18 des Schaufelblatts 12, der aus dem Leichtmetalllegierungswerkstoff hergestellt ist, durch ein generatives Fertigungsverfahren auf den radial inneren Abschnitt 17 des Schaufelblatts 12 aufgebracht. Als generatives Fertigungsverfahren wird vorzugsweise Lasersintern oder Laserauftragsschweißen genutzt.

Eine Schnittebene des radial inneren Abschnitts 17, auf welche der radial äußere Abschnitt 18 aufgebracht wird, ist vorzugsweise planar bzw. eben ausgeführt. Im Ausführungsbeispiel der Fig. 5 und 6 ist die Schnittebene aus zwei planaren bzw. ebenen Teilabschnitten zusammengesetzt, die gegeneinander geneigt sind.

### Bezugszeichenliste

- 10: Laufschaufel
- 11: Schaufelfuß
- 12: Schaufelblatt
- 13: Strömungseintrittskante
- 14: Strömungsaustrittskante
- 15: Fläche
- 16: Schaufelspitze
- 17: radial innerer Abschnitt
- 18: radial äußerer Abschnitt
- 19: Übergangsbereich
- 20: Materialaufdickung
- 21: Materialaussparung
- R: Radialrichtung

## Patentansprüche

1. Laufschaufel (10) einer Strömungsmaschine,
mit einem Schaufelfuß (11),
mit einem eine Strömungseintrittskante (13), eine Strömungsaustrittskante (14) und sich zwischen der Strömungseintrittskante (13) und der Strömungsaustrittskante (14) erstreckende, strömungsführende Flächen (15) aufweisenden Schaufelblatt (12),
**dadurch gekennzeichnet, dass**
der Schaufelfuß (11) und ein radial innerer Abschnitt (17) des Schaufelblatts (12) aus einem Stahlwerkstoff hergestellt sind, und durch Fräsen oder Schmieden hergestellt werden, radial ein äußerer Abschnitt (18) des Schaufelblatts (12) aus einem leichteren Werkstoff hergestellt ist, wobei der radial äußere Abschnitt (18) des Schaufelblatts (12), der aus dem Leichtmetalllegierungswerkstoff hergestellt ist, durch ein generatives Fertigungsverfahren auf den radial inneren Abschnitt (17) des Schaufelblatts (12) aufgebracht wird,
und zwischen dem radial inneren Abschnitt (17) des Schaufelblatts (12) und dem radial äußeren Abschnitt (18) des Schaufelblatts (12) ein Übergangsbereich (19) ausgebildet ist, der aus einer Mischung des Stahlwerkstoffs und des Leichtmetalllegierungswerkstoffs hergestellt ist.

2. Laufschaufel nach Anspruch 1, **dadurch gekennzeichnet, dass** der leichtere Werkstoff ein Leichtmetalllegierungswerkstoff oder ein keramischer Werkstoff oder eine Kombination aus selbigen ist.

3. Laufschaufel nach einem der Ansprüche 1 bis 2, **dadurch gekennzeichnet, dass** im Bereich der Strömungseintrittskante (13) sich der radial innere Abschnitt (17) ausgehend vom Schaufelfuß (11) bis minimal 10% und maximal 98%, bevorzugt bis maximal 60%, besonders bevorzugt bis maximal 50%, der radialen Höhe des Schaufelblatts (12) erstreckt.

4. Laufschaufel nach einem der Ansprüche 1 bis 3, **dadurch gekennzeichnet, dass** im Bereich der Strömungsaustrittskante (14) sich der radial innere Abschnitt (14) ausgehend vom Schaufelfuß (11) bis minimal 10% und maximal 98%, bevorzugt bis maximal 60%, besonders bevorzugt bis maximal 50%, der radialen Höhe des Schaufelblatts (12) erstreckt.

5. Laufschaufel nach einem der Ansprüche 1 bis 4, **dadurch gekennzeichnet, dass** der radial innere Abschnitt (17) des Schaufelblatts (12) und der radial äußere Abschnitt (18) des Schaufelblatts (12) im Bereich der Strömungseintrittskante (13) und der Strömungsaustrittskante (14) gleich große radiale Erstreckungen aufweisen.

6. Laufschaufel nach einem der Ansprüche 1 bis 4, **dadurch gekennzeichnet, dass** der radial innere Abschnitt (17) des Schaufelblatts (12) im Bereich der Strömungseintrittskante (13) eine kleinere und damit der radial äußere Abschnitt (18) des Schaufelblatts (12) im Bereich der Strömungseintrittskante (13) eine größere radiale Erstreckung aufweist als im Bereich der Strömungsaustrittskante (14).

7. Laufschaufel nach einem der Ansprüche 1 bis 4, **dadurch gekennzeichnet, dass** der radial innere Abschnitt (17) des Schaufelblatts (12) im Bereich der Strömungseintrittskante (13) eine größere und damit der radial äußere Abschnitt (18) des Schaufelblatts (12) im Bereich der Strömungseintrittskante (13) eine kleinere radiale Erstreckung aufweist als im Bereich der Strömungsaustrittskante (14).

8. Laufschaufel nach einem der Ansprüche 1 bis 7, **dadurch gekennzeichnet, dass** in einem Übergangsbereich (19) zwischen dem radial inneren Abschnitt (17) des Schaufelblatts (12) und dem radial äußeren Abschnitt (18) des Schaufelblatts (12) eine Materialaussparung (21) und/oder eine Materialaufdickung (20) ausgebildet ist.

9. Laufschaufel nach Anspruch 8, **dadurch gekennzeichnet, dass** die Materialaussparung (21) und/oder die Materialaufdickung (20) zumindest im Bereich der Strömungseintrittskante (13) ausgebildet ist.

10. Verfahren zum Herstellen einer Laufschaufel (10) einer Strömungsmaschine nach einem der Ansprüche 1 bis 9, mit folgenden Schritten
der Schaufelfuß (11) und der radial innere Abschnitt (17) des Schaufelblatts (12), die aus dem Stahlwerkstoff hergestellt sind, werden durch Fräsen oder Schmieden hergestellt;
der radial äußere Abschnitt (18) des Schaufelblatts (12), der aus dem Leichtmetalllegierungswerkstoff hergestellt ist, wird durch ein generatives Fertigungsverfahren auf den radial inneren Abschnitt (17) des Schaufelblatts (12) aufgebracht.

11. Verfahren nach Anspruch 10, **dadurch gekennzeichnet, dass** als generatives Fertigungsverfahren Lasersintern oder Laserauftragsschweißen genutzt wird.

## Claims

1. A rotor blade (10) of a turbomachine,
having a blade root (11)
having a blade leaf (12) comprising a flow leading edge (13), a flow trailing edge (14) and flow-guiding surfaces (15) extending between the flow leading edge (13) and the flow trailing edge (14),
**characterised in that**
the blade root (11) and a radially inner portion (17) of the blade leaf (12) are produced from a steel material and are produced by milling or forging,
radially an outer portion (18) of the blade leaf (12) is produced from a lighter material, wherein the radially outer portion (18) of the blade leaf (12) is produced from the light metal alloy material, is applied by a generative production method onto the radially inner portion (17) of the blade leaf (12),
and between the radially inner portion (17) of the blade leaf (12) and the radially outer portion (18) of the blade leaf (12) a transition region (19) is formed, which is produced from a mixture of the steel material and of the light metal alloy material.

2. The rotor blade according to Claim 1, **characterised in that** the lighter material is a light metal alloy material or a ceramic material or a combination thereof.

3. The rotor blade according to any one of the Claims 1 to 2, **characterised in that** in the region of the flow leading edge (13), the radially inner portion (17), emanating from the blade root (11) extends up to minimally 10% and maximally 98%, preferably up to maximally 60%, particularly preferably up to maximally 50% of the radial height of the blade leaf (12).

4. The rotor blade according to any one of the Claims 1 to 3, **characterised in that** in the region of the flow trailing edge (14), the radially inner portion (14), emanating from the blade root (11), extends up to minimally 10% and maximally 98%, preferably up to maximally 60%, particularly preferably up to maximally 50% of the radial height of the blade leaf (120.

5. The rotor blade according to any one of the Claims 1 to 4, **characterised in that** the radially inner portion (17) of the blade leaf (12) and the radially outer portion (18) of the blade leaf (12) have in the region of the flow leading edge (13) and the flow trailing edge (14) radial extents of the same size.

6. The rotor blade according to any one of the Claims 1 to 4, **characterised in that** the radially inner portion (17) of the blade leaf (12) in the region of the flow leading edge (13) has a smaller and thus the radially outer portion (18) of the blade leaf (12), in the region of the flow leading edge (13), a greater radial extent than in the region of the flow trailing edge (14).

7. The rotor blade according to any one of the Claims 1 to 4, **characterised in that** the radially inner portion (17) of the blade leaf (12) in the region of the flow leading edge (13) has a greater and thus the radially outer portion (18) of the blade leaf (12) in the region of the flow leading edge (13), a smaller radial extent than in the region of the flow trailing edge (14).

8. The rotor blade according to any one of the Claims 1 to 7, **characterised in that** in a transitional region (19) between the radially inner portion (17) of the blade leaf (12) and the radially outer portion (18) of the blade leaf (12), a material recess (21) and/or a material thickening (20) is formed.

9. The rotor blade according to Claim 8, **characterised in that** the material recess (21) and/or the material thickening (20), is formed at least in the region of the flow leading edge (13).

10. A method for producing a rotor blade (10) of a turbomachine according to any one of the Claims 1 to 9, with the following steps
the blade root (11) and the radially inner portion (17) of the blade leaf (12), which are produced from the steel material, are produced by milling or forging;
the radially outer portion (18) of the blade leaf (12), which is produced from the light metal alloy material, is applied onto the radially inner portion (17) of the blade leaf (12) by a generative production method.

11. The method according Claim 10, **characterised in that** as generative production method, laser sintering or laser deposit welding is utilised.

## Revendications

1. Pale de rotor (10) de turbomachine,
comportant un socle de pale (11),
comportant une pale (12) présentant un bord d'entrée de flux (13), un bord de sortie de flux (14) et des surfaces de guidage de flux (15) s'étendant entre le bord d'entrée de flux (13) et le bord de sortie de flux (14), **caractérisé en ce que**
le socle de pale (11) et une section radialement interne (17) de la pale (12) sont réalisés en un matériau en acier et sont réalisés par fraisage ou forgeage,
une section externe (18) du profil aérodynamique (12) est constituée d'un matériau plus léger, dans lequel la section radialement externe (18) de la pale (12), qui est constituée d'un matériau en alliage de métal léger, est appliquée par un processus de fabrication génératif sur la section radialement interne (17) de la pale (12)
et entre la section radialement interne (17) de la pale (12) et la section radialement externe (18) de la pale (12) une zone de transition (19) est réalisée, qui est constituée d'un mélange du matériau en acier et du matériau en alliage de métal léger.

2. Pale de rotor selon la revendication 1, **caractérisée en ce que** le matériau plus léger est un matériau en alliage de métaux légers ou un matériau céramique ou une combinaison de ceux-ci.

3. Pale de rotor selon une des revendications 1 à 2, **caractérisée en ce que** dans la zone du bord d'entrée de flux (13) la section radialement interne (17) s'étend depuis le socle de pale (11) jusqu'à un minimum de 10% et un maximum de 98%, de préférence jusqu'à un maximum de 60%, de manière particulièrement préférée jusqu'à un maximum de 50%, de la hauteur radiale de la pale (12).

4. Pale de rotor selon une des revendications 1 à 3, **caractérisée en ce que** dans la zone du bord de sortie de flux (14), la section radialement interne (14), à partir du socle de pale (11), s'élève jusqu'à un minimum de 10% et un maximum de 98%, de préférence jusqu'à un maximum de 60%, de préférence jusqu'à un maximum de 50%, de la hauteur radiale de la lame (12).

5. Pale de rotor selon une des revendications 1 à 4, **caractérisée en ce que** la section radialement interne (17) de la pale (12) et la section radialement externe (18) de la pale (12) dans la zone de bord d'entrée de flux (13) et le bord de sortie de flux (14) présentent des extensions radiales identiques.

6. Pale de rotor selon une des revendications 1 à 4, **caractérisée en ce que** la section radialement interne (17) de la pale (12) au niveau du bord d'entrée de flux (13) présente une extension radiale plus petite dans la zone du bord d'entrée de flux (13) et donc la section radialement externe (18) de la pale (12) présente une extension radiale plus grande que dans la zone du bord de sortie de flux (14).

7. Pale de rotor selon une des revendications 1 à 4, **caractérisée en ce que** la section radialement interne (17) de la pale (12) dans la zone de bord d'entrée de flux (13) présente une plus grande extension radiale et donc la section radialement externe (18) de la pale (12) dans la zone du bord d'entrée de flux (13) présente une extension radiale plus petite que dans la zone du bord de sortie de flux (14).

8. Pale de rotor selon une des revendications 1 à 7, **caractérisée en ce que** dans une zone de transition (19) entre la section radialement interne (17) de la pale (12) et la section radialement externe (18) de la pale (12) un évidement de matériau (21) et/ou un épaississement de matériau (20) est formé.

9. Pale de rotor selon la revendication 8, **caractérisée en ce que** l'évidement de matériau (21) et/ou l'épaississement de matériau (20) est formé au moins dans la zone du bord d'entrée de flux (13).

10. Procédé de réalisation d'une pale de rotor (10) de turbomachine selon une des revendications 1 à 9, comportant les étapes suivantes
le socle de pale (11) et la section radialement interne (17) de la pale (12), qui sont constituées du matériau en acier, sont fabriquées par fraisage ou forgeage ;
la section radialement externe (18) de la pale (12), qui est constituée du matériau en alliage de métal léger, est appliquée à la section radialement interne (17) de la pale (12) à l'aide d'un processus de fabrication génératif.

11. Procédé selon la revendication 10, **caractérisé en ce que** comme procédé de fabrication génératif, on utilise le frittage laser ou le soudage par dépôt laser.
